# EUROPEAN PATENT APPLICATION

(11) **EP 2 390 208 A1**
(43) Date of publication of application: **30.11.2011**
(21) Application number: 11160214.0
(22) Date of filing: 29.03.2011
(51) Int. Cl.: B65G 69/18

(54) **Hopper assembly**

(30) Priority: 27.05.2010 GB 1008839
(71) Applicant: B&W Mechanical Handling, Ltd., Cambridge Cambridgeshire CB7 4EA (GB)
(72) Inventor: Slee-Smith, Peter Michael, Cambridge, Cambridgeshire CB6 1QG (GB); Mann, Arthur, Cambridge, Cambridgeshire CB7 5JA (GB)
(74) Representative: Roberts, David Leslie

(57) **Abstract**

A hopper assembly for use in handling particulate materials comprises an outer hopper (28) which defines a tapered volume within the hopper, an inner hopper (26) having a mouth for receiving said particulate materials. The inner hopper (26) is partially nested within the outer hopper (28) to define a space between the inner hopper and the inclined wall of the outer hopper. Filtering means (30, 32, 34 and 36) comprising a filter through which, in use, air is extracted from the volume to reduce emissions of airborne particles through the mouth, the filter being so sized and shaped as to extend into the space to enable the filter to be at least partially accommodated by the space, thereby to enable the assembly to be of a relatively compact construction or to have a relatively large hopper angle for its height and width/diameter. Additionally or alternatively, a hopper assembly for use in handling particulate materials comprises an outer hopper (28) and a filter (30) through which air is extracted from the assembly to prevent or reduce the emission of airborne particles therefrom, the filter being situated adjacent to a portion of the outer hopper and orientated at substantially the same angle as said adjacent portion.

## Description

### Field of the Invention

This invention relates to hopper assemblies for use in handling particulate materials, and more particularly to hopper assemblies having systems for at least inhibiting the emissions of airborne particles (for example dust) from the particulate material fed into an/or discharged from the hopper assemblies.

### Background to the Invention

Hopper assemblies are typically used in the transfer of dry bulk materials from a container to a receptacle, which may be another, differently sized container. For example, such assemblies are commonly used in the transfer of dry bulk particulate materials, for example clinker, slag, gypsum, limestone, iron ore, bauxite, coal, copper concentrates, sulphur, biomass (woodchip etc), bentonite, nickel ores, soda ash and many others, from the holds of cargo ships into land vehicles such as lorries or railway trucks or onto conveyors.

The hopper assembly is situated on a quay at which a cargo vessel has been moored, and receives material from a crane grab which picks successive loads of material out of the vessel's hold and deposits them into the mouth in the upper region of the hopper. The lower, narrow region of the hopper includes a outlet chute through which the material is then discharged into a waiting lorry, railway truck, or onto a conveyor.

The process of depositing the materials into the hopper assembly can create a large amount of airborne particles, such as dust, from the bulk material, can act to the detriment of the environment around the hopper assembly and also lead to a significant amount of product attrition (i.e. loss of bulk material before it is discharged into the waiting vehicle). This problem can be ameliorated by means of a dust control system which conventionally takes the form of a wide area one way valve spanning the hopper mouth and a series of fans which extract air from the interior of the hopper assembly via filters for filtering out the dust. Known types of one way valve comprise a series of substantially vertical flexible flaps mounted on pressed steel sections and arranged to flex to allow material to pass from the top of the valve into the hopper interior, but which seal against the steel sections where there is no material to urge the flaps open.

When the material is released by the grab it falls through the one way valve and accumulates within the assembly. This displaces a volume of air which will attempt to escape from the hopper into the atmosphere, normally taking with it an unacceptable amount of material dust. However, the flaps prevent this happening, so that the air exhausted from the hopper assembly has travelled through the filters which filter out the dust. The assembly has an inner hopper, in which the wide area one way valve is provided and an outer hopper which is spaced from the inner hopper so as to define a gap between the two hoppers. This gap provides a passage for the air being extracted by the dust control system.

The filters and the fans are incorporated into a number of units having housings which sit in the region of the top of the space between the inner and outer hoppers. The filters/fan units are bulky and significantly increase the minimum possible distance between the inner and outer hoppers. Thus the need to accommodate the filter units significantly increases the required size of the hopper assemblies or reduces the hopper angle for an assembly of a given size.

### Summary of the Invention

According to a first aspect of the invention, there is provided a hopper assembly for use in handling particulate materials, the assembly comprising an outer hopper having at least one inclined wall for defining a tapered volume within the hopper, an inner hopper having a mouth for receiving said particulate materials, and being partially nested within the outer hopper to define a space between the inner hopper and the inclined wall of the outer hopper, and filtering means comprising a filter through which, in use, air is extracted from the volume to reduce emissions of airborne particles through the mouth, wherein the filter is so sized and shaped as to extend into the space to enable the filter to be at least partially accommodated by the space.

Because the wall of the outer hopper is inclined, it can be considered to be the hypotenuse of a notional triangle, the other two sides of which constitute the horizontal and vertical extent of the wall. The hypotenuse is the longest side of a right angled triangle, so that an inclined wall provides a greater area, against which a filter can be placed, than an upright wall of the same vertical extent. Accommodating at least part of the filter in said space therefore enables the hopper assembly to be of a relatively compact construction, or to have a relatively large hopper angle for a given height and width or diameter of a hopper assembly.

Preferably, the inner hopper also has an inclined wall which is parallel to the inclined wall of the outer hopper, the two inclined walls being spaced from each other to define said space.

This facilitates efficient use of the tapered volume defined by the inclined wall of the outer hopper, both to handle the particulate material and to accommodate at least part of the filter.

Preferably, the filter is substantially wholly accommodated in the space between the inclined walls of the inner and outer hoppers.

The filter may conveniently comprise a number of elongate filter members which extend substantially parallel to the inclined side.

The filter may comprise a reverse jet filter, each filter member preferably comprising a fibrous or porous bag. Reverse jet filters have the advantage that the filter members can be cleaned by means of short duration pulses of air for back flushing the filters without interrupting the operation of the hopper assembly. Material released from the filters in this way will fall into the hopper volume for subsequent discharge.

Preferably, the filter has a housing at least part of which is constituted by said inclined walls of the inner and outer hopper.

The hopper assembly may to an advantage include a wide area one way valve across the mouth, the valve being operable to permit the passage of materials through the mouth and into the hopper whilst preventing or inhibiting the escape of airborne particles through the mouth.

In this case, the filter may to advantage extend below the level of the valve.

This enables the valve to be located closer to the wide end of the hopper and therefore to have a relatively large area, compared with prior art arrangement in which filters are situated above the valve.

The inclined walls of the outer hopper may be annular or may be one of a plurality of inclined walls that bound the tapered volumes, the inclined wall of the inner hopper similar being annular or one of a plurality of such walls which is so arranged that the space surround the inner hopper, the filter being one of a plurality of such filters distributed around the inner hopper.

Each filter may comprise part of a filter unit which also includes a fan for extracting air from the volume via the filter.

Preferably, the hopper assembly includes an outlet chute, through which, in use, material in the hopper is discharged, and an extraction system for extracting airborne particles from the material being discharged through the chute, wherein the extraction system exhausts air and particles into the volume into the hopper.

It is known to provide a dust extraction system for the discharge chute of the hopper assembly, but in known assemblies this chute has its own filters. The abovementioned feature of the present invention avoids the need for the assembly to have dedicated additional filters for the chute extraction system since the extracted air can be processed by the filter units that extract air from the hopper volume. According to a second aspect of the invention, there is provided a hopper assembly for use in handling particulate materials, the assembly comprising an outer hopper, a filter through which air is extracted from the assembly to prevent or reduce the emission of airborne particles from the assembly, the filter being situated adjacent to a portion of the outer hopper and orientated at substantially the same angle as the adjacent portion of the outer hopper.

Positioning and orientating the filter in this way substantially reduces the size requirements of the hopper assembly compared with the known type of assembly in which the filters are provided in filter units which sit at the top of the hopper and are at an angle to the adjacent part of the hopper.

Preferably, the assembly includes an inner hopper, at least partially nested within the outer hopper, to define the space between the inner and outer hoppers, which space accommodates a filter.

Preferably, the inner and outer hoppers have inclined walls, which define the portion of the space in which the filter is accommodated, the space thus constituting a passage orientated at the same angle as the filter.

The invention also lies in a hopper assembly having mouth through which particulate material to be handled by the assembly is received and an outlet chute through which said material is discharged, the assembly including a filter through which air is expelled from the hopper to prevent or inhibit the emission of airborne particles through said mouth, the hopper assembly also including an extraction system for preventing or inhibiting emission of airborne particles from materials discharged through the chute, wherein the extraction system draws air and said particles from the region of the chute into the hopper.

### Brief description of the Drawings

The invention will now be described by way of example only, with reference to the accompanying drawings, in which:-
Figure 1 is a simplified sectional side view of a prior art hopper assembly;
Figure 2 is a sectional side view of an assembly in accordance with the invention;
Figure 3 is a sectional end view of the assembly shown in Figure 2;
Figure 4 is a section along the line A-A of Figure 3;
Figure 5 is a plan view of the assembly of Figures 2-4;
Figure 6 an isometric view of part of a wide area one way valve of the assembly shown in Figures 2-5;
Figure 7 is more detailed view of part of the wide area one way valve;
Figure 8 is a sectional side view from the same direction as that of Figure 2, of part of the hopper assembly of Figures 2-5 to an enlarged scale;
Figure 9 is an exploded isometric view of part of one filter unit of the hopper assembly of Figures 2-5 and 8; and

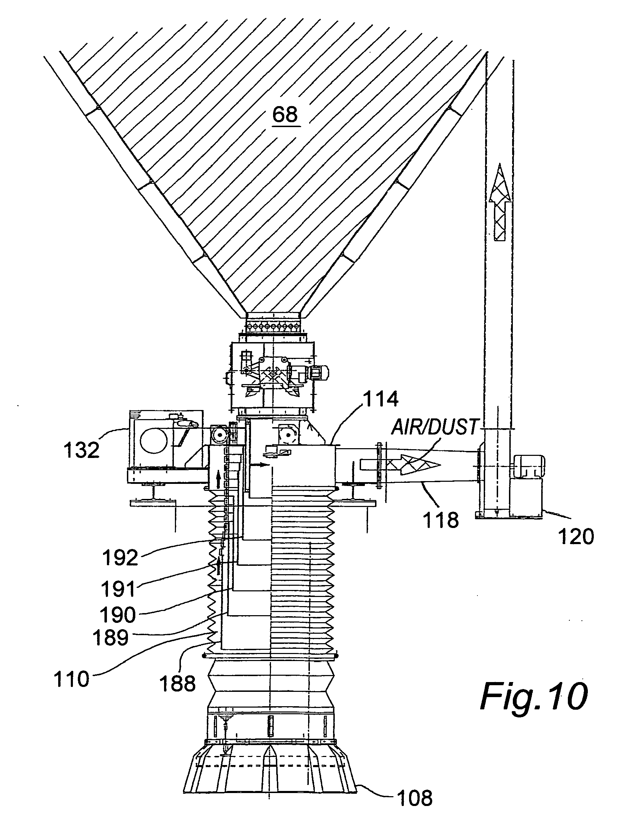

Figure 10 is a partially sectioned view, in the same plane as that of Figure 4, of the hopper assembly in accordance with the invention, showing the hopper's outlet chute assembly in greater detail.

### Detailed description

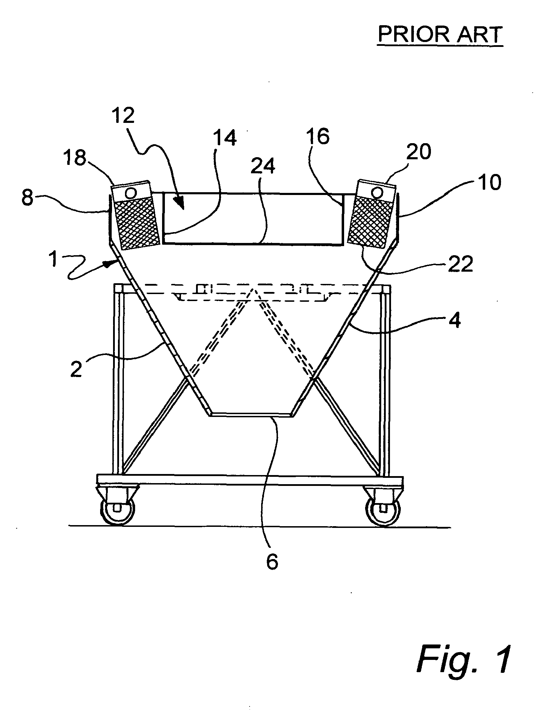

With reference to Figure 1, a known type of hopper assembly comprises an outer hopper 1 which, when viewed in plan, is of a square shape, and which has four inclined, truncated triangular walls, two of which are shown at 2 and 4 which extend from the region of the top of the hopper to the hopper outlet, denoted by reference numeral 6. It will be appreciated that the inclined walls enclose a volume in the hopper which is tapered from top to bottom. At the top of the inclined walls, such as walls 2 and 4, there is provided a respective vertical wall, such as the walls 8 and 10, and these vertical walls define a square opening at the top of the hopper. An inner hopper 12 nests within the portion of the outer hopper 1 defined by the vertical walls, has its own four vertical walls, two of which are shown at 14 and 16, and is square when viewed in plan.

Each of the walls of the inner hopper 12 is spaced from the adjacent respective vertical walls of the outer hopper 1 to define a space which is square shaped and which encircles the inner hopper 12. That space accommodates a number of filter units which are shown at 18 and 12, on each of the four sides of the spaces. Each of the filter units has a fan which draws air into the unit through an array of elongated filter bags, for example bags 22 of the unit 20, which filter out dust from the material within the hopper assembly.

A wide area one way valve 24 is provided at the mouth of the hopper, within the inner hopper 12, and comprises a series of flexible flaps which open under the weight of material deposited on the valve to allow that material to fall through into the outer hopper. However, the resilience of the flaps closes them in the absence of any material to prevent the escape of air and airborne dust. As the material passes through the valve, the fans of the filter units will draw air into the hopper along with the material and enable the air that is displaced by the increasing volume of material within the hopper to escape through the filters. As can be seen from Figure 1, the filter units 18 and 20 sit in the region above the inclined walls of the outer hopper and are at an angle to the vertical internal and external hopper walls that define the space which accommodates those filters. Accordingly, the need to accommodate the filters can make the assembly considerably taller and wider than it would otherwise have to be, or mean that the hopper angle for an assembly of a given width is smaller than it would otherwise need to be.

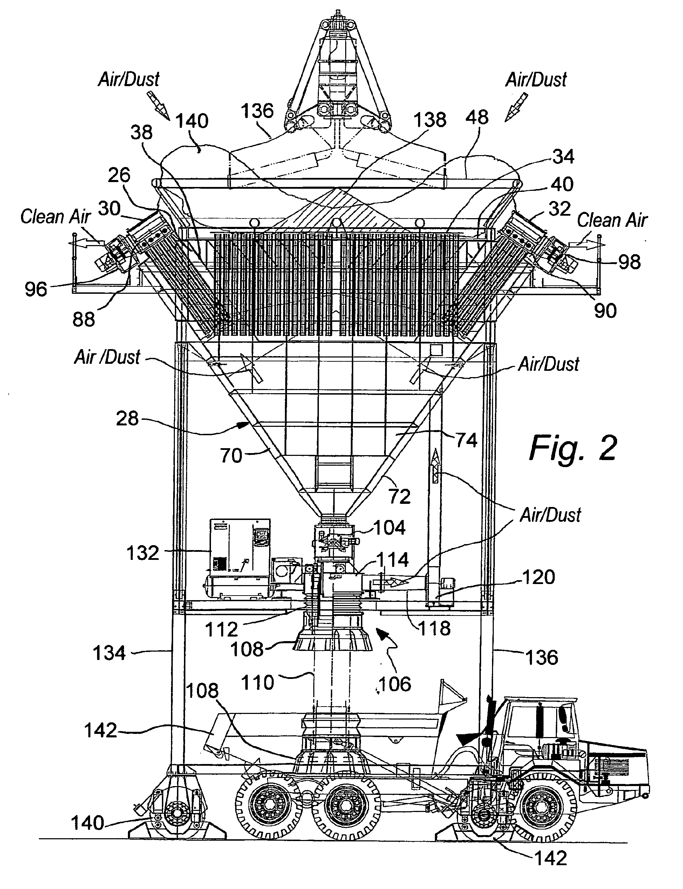

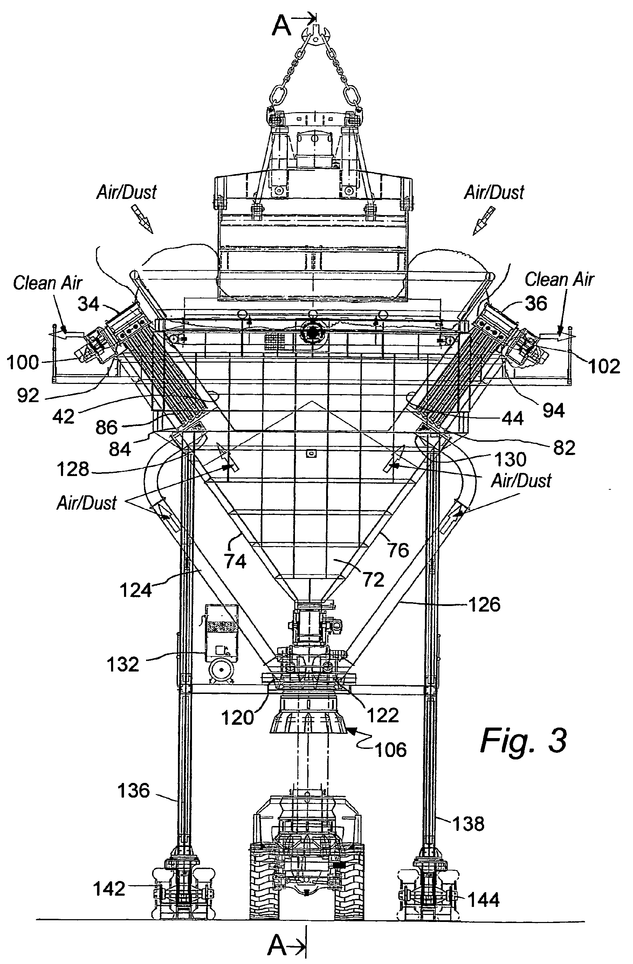

Turning to Figures 2-5, a hopper assembly in accordance with the invention also comprises an inner hopper 26 and an outer hopper 28 which between them define a space for accommodating a plurality of filter units 30,32,34 and 36, each of which extends along a respective side of the outer and inner hoppers.

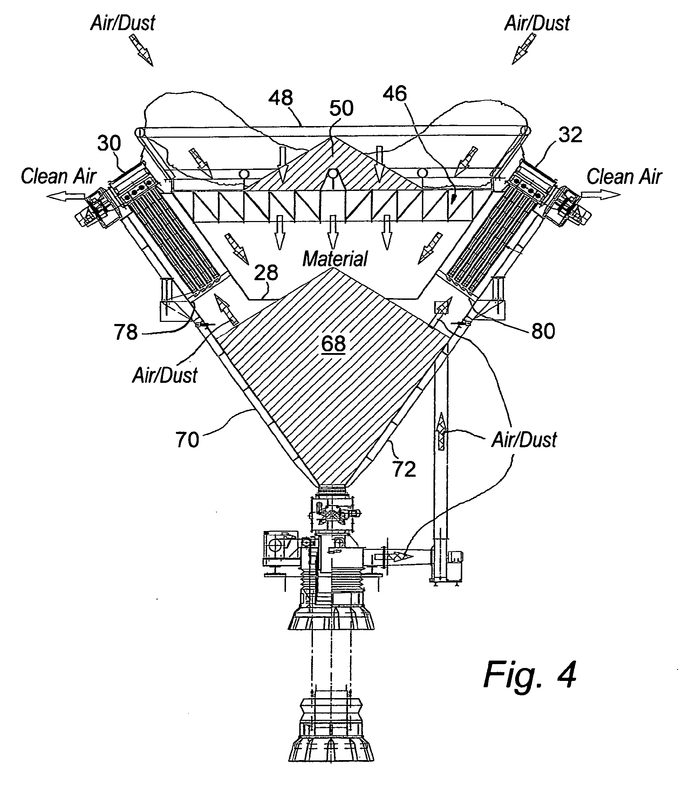

The inner hopper comprises four planar inclined walls 38,40,42 and 44 which are connected together at right angles to define a square upper opening which constitutes a mouth across which a wide area non-return valve 46 extends (see Figure 4). The walls 38,40,42 and 44 are of an identical shape, which is that of a truncated, inverted triangle, so that the walls define a tapered volume within the inner hopper 28 which is in the general shape of a inverted, truncated four-sided pyramid. An additional feeder hopper 48 is mounted on top of the inner hopper 28 and has the same square shape and hopper angle as the latter. The feeder hopper 48 helps to contain bulk material 50 deposited on top of the valve 46.

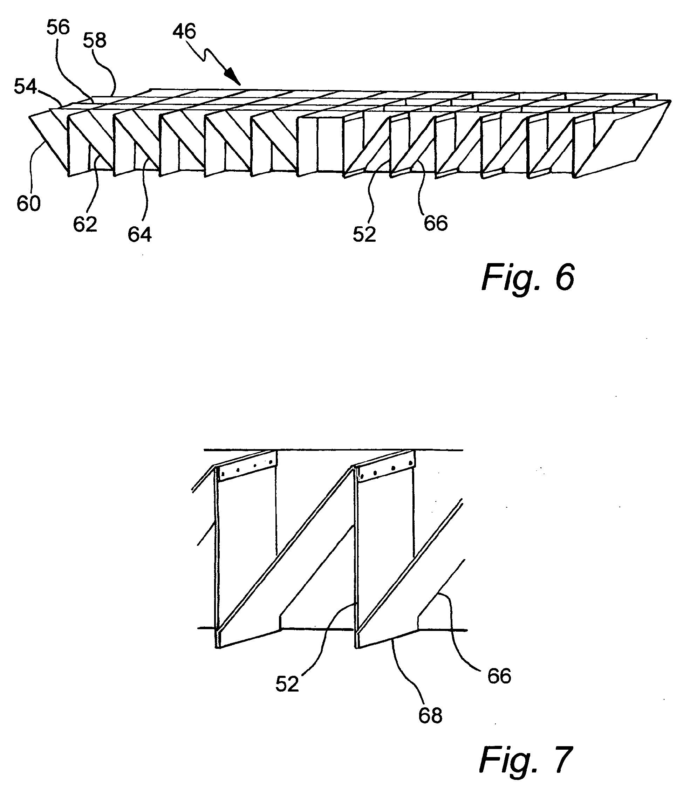

With reference to Figures 6 and 7, the valve 46 comprises an array of vertical rubber flaps, such as the flap 52, mounted on a frame having an array of parallel vertical divider plates (such as the plates 54, 56 and 58) which carry angled plates, for example the plates 60,62,64,66, each of which cooperates with a respective flap. As can be seen more clearly in Figure 7, the lower end of each of the angled plates is bent into the vertical such as the plate 68 to the plate 66, to provide a seat for the respective flap. The flexibility of the vertical flaps is such that when material is deposited on top of the valve its weight urges the flaps open to allow the material to fall into the internal tapered volume defined by the outer hopper, as shown at 68 in Figure 4.

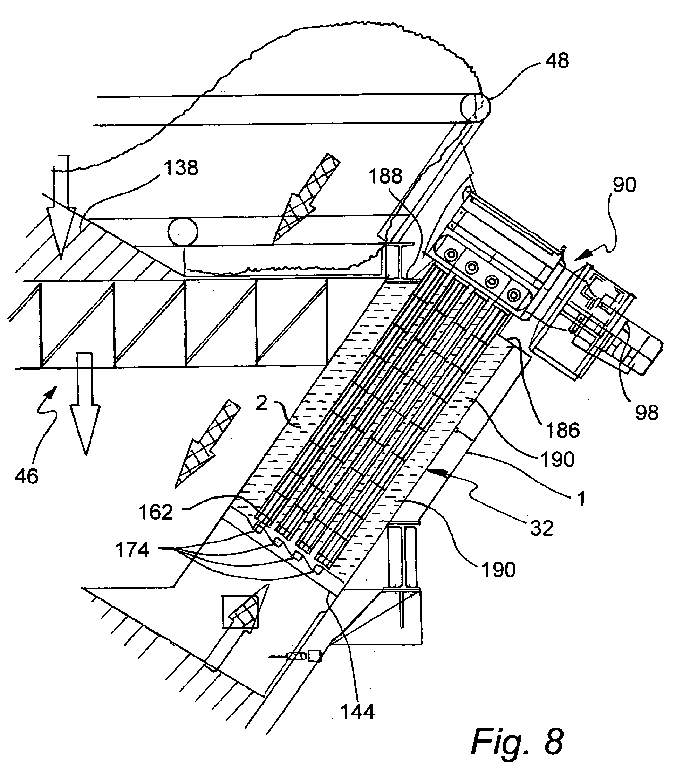

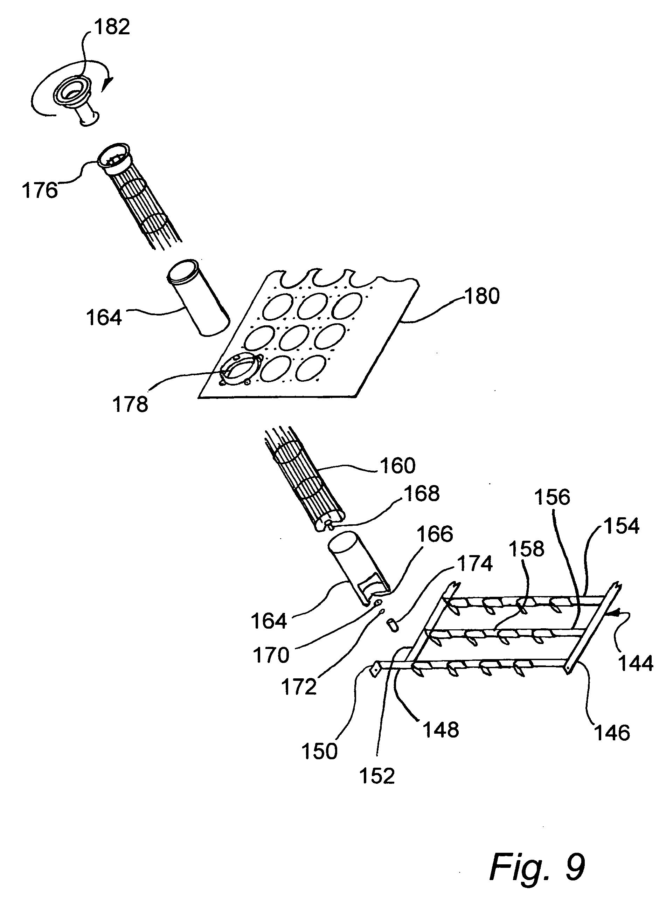

The outer hopper 28 has four inclined walls 70,72,74 and 76 which are also of a truncated triangular shape, and arranged in a configuration which is square, when viewed in plan. Each of the outer hopper walls is inclined at the same angle as the respective one of the inner hopper walls so that the volume defined by the outer hopper is also in the shape of a tapered, truncated, four-sided, inverted pyramid. Each of the filter units 30, 32, 34 and 36 includes a respective array of parallel spacer plates which extend perpendicularly between each wall of the outer hopper and the adjacent wall of the inner hopper to support the inner hopper in position in the outer hopper, in which position the inner hopper is nested within the outer hopper and is spaced therefrom to define the space for accommodating the filter units 30,32,34 and 36 between the inclined walls of the inner and outer hopper. The construction of the filter units is described in greater detail below, with reference to Figures 8 and 9.

Each of those filter units comprises a reverse jet filter having a 14x4 array of elongate, identical filter members, each comprising a porous elongate bag, such as the bag 86 of the filter unit 34 which extends in a direction parallel to the walls of the inner and outer hopper between which that bag is accommodated. The bag is mounted on an underlying metal support frame which enables air to be either drawn into the filter from within the hopper or pass through the filter in the other direction in order to dislodge particles caught by the filter. The dislodged particles would then fall back into the material 68 in the hopper. The tops of the bags are situated adjacent the top of the space between the inner and outer hoppers and the bottoms of the bags are situated in the region of the lower portions of the inner hopper walls.

The filter units 30, 32, 34 and 36 are of identical construction, and parts of the filter units 30 and 32 are shown in more detail in Figures 8 and 9. Corresponding components of the filter units are noted by the same reference numerals, for the sake of convenience.

At the bottom of each unit there is provided a respective support frame 144 which acts as a rack for supporting the lower end of the filter bags and their corresponding underlying support frames.

The support frame 144 has an upper member 146 that abuts the inner hopper 12 and which is bolted or welded to the inner hopper. Two end strips, one of which is shown at 148, extend perpendicularly from the upper member 146 and are terminated in tabs, for example tab 50, which abut the outer hopper and are attached thereto, for example by being welded or bolted. The end strips support a lower frame member 152 which extends parallel to the member 146 and, with the member 146, provides support for an array of further strips, for example as shown at 154 and 156 which extend parallel to the end strips, and which each carry a respective set of four hooks, such as the hook 158 on the strip 156. The end members also carry corresponding sets of four hooks, and each hook provides a support for the lower end of a respective filter bag and its associated support frame. The underlying support frame for each filter member comprises a respective cylindrical cage, such as the cylindrical cage 160 in Figure 9 or the cylindrical cage 162 of Figure 8, the axis of each cage being parallel to the inclined walls of the inner and outer hoppers. In Figure 9, reference numeral 164 denotes a filter bag which fits over the support cage 160. Only the upper and lower portions of the bag 164 are shown in Figure 9 but in reality the bag extends substantially the whole length of the cage 160. The lower portion of the bag is shown in partially cut away form to show that the bottom of the bag is provided with a circular central hole 166 through which a captive bolt 168 on the cage 160 extends. A sealing washer 170 and spring washer 172 fit over the bolt and are held in position by an internally threaded cylindrical support spigot 174 which in use, rests on a respective one of the hooks of the support frame 144. The spigot thus helps to retain the bag on its cage, and supports the bag and cage on the frame.

The upper portion of the support cage 160 includes a flanged cap 176 which, in use, is supported on an aluminium collar 178 riveted or bolted to a cell plate 180 which includes a series of apertures, each of which is in registry with a respective aluminium collar, and through which a respective cage and bag pass. At the top of the cage there is provided a cast aluminium venturi insert 182 which fits into the cage with a bayonet action.

The upper end of the filter bag 164 includes a flange which, in use, is held captive between the flange of the end cap 176 and the collar 178.

The plate 180 forms part of an upper mounting casing for the filter unit 130. The mounting casings for the units 130, 132, 134 and 136 are respectively denoted by the reference numerals 88, 90, 92 and 94. Each casing provides a common outlet chamber, fed by all of the bags for the filter unit, from which air is extract using a respective fan and motor unit 96,98,100,102 (forming part of the filter unit).

The casings 88,90,92 and 94 are sealed against the adjacent walls of the inner and outer hopper by means of sections plates such as the plates 186 and 188 shown in Figure 8, and, along with the walls themselves and the spacer plate 78,80,82 and 84 define housings for the filters.

With reference to Figure 8, the filter members are arranged in 14 rows of 4 members extending across the space between the inner and outer hopper. A spacer plate 190 is situated in the space between two neighbouring rows of the filter members and extends perpendicularly between the inner and outer hopper. The spacer plate is attached at its side edges to the inner and outer hoppers and supports the inner hopper in position in relation to the outer hopper. Each filter unit has at least one such plate, but preferably the filter units each include a plurality of spacer plates.

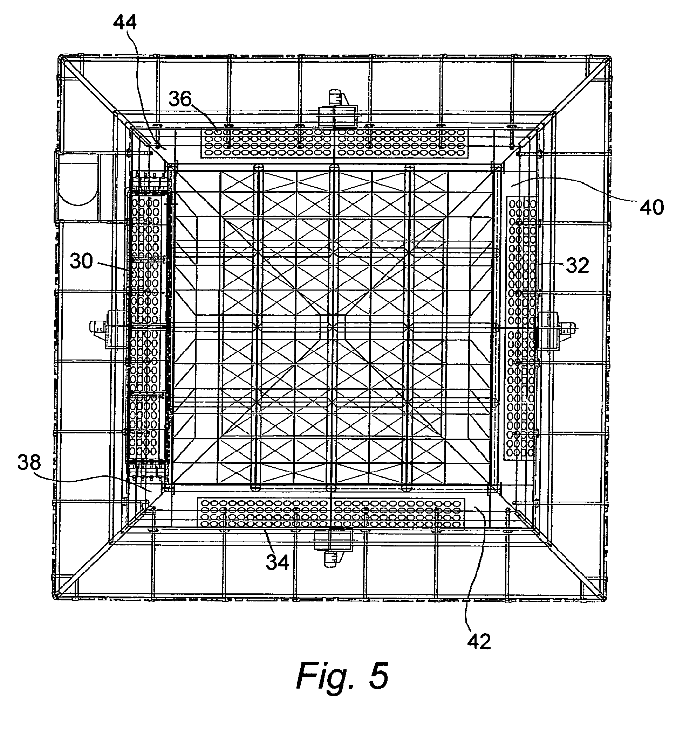

With reference to Figure 5, it can be seen that the filter units do not occupy all of the upper portion of the space between the inner and outer hoppers. The parts of that portion which are not occupied by the filters are closed off by the plates 186 and 188 so that the only exit route for air passing into the space between the inner and outer hoppers through the spacer plate is via the filters.

The bottom of the outer hopper 28 is provided with an outlet opening connected to a control valve assembly 104 which allows material to leave the hopper in a controlled manner. The valve 104 is in turn connected to an outlet chute assembly which is of similar form to the outlet chute used in the applicant's existing line of hoppers sold under the name ECO-HOPPER™. The chute assembly comprises an outlet nozzle 108 which is mounted on an inner extendible telescopic pipe assembly (consisting of five telescopically arranged brackets 188-192) 110 and an outer flexible extendible pipe 112, which is spaced from the inner pipe assembly so as to define an annular passage between the two pipes. This passage communicates with an annular chamber 114 connected to two outlet pipes, one of which is shown at 118, each of which is in turn, connected to a respective motor driven blower 120 and 122. Each blower, in use, conveys air into a respective one of a pair of connecting pipes 124 and 126, the outlet ends of which communicate with the interior of the outer hopper via ports 128 and 130. This arrangement of blowers, connecting pipes and ports replaces the fan and filter(s) arrangement of the conventional ECO-HOPPER™, and functions as an extraction system for preventing or inhibiting omission of airborne particles from material being discharged through the chute assembly 106.

Power to operate the various electrical components of the hopper assembly is provided from a dockside supply. The assembly includes an air compressor 132 which is supported on a platform of a frame assembly having four vertical legs, three of which are shown at 134,136 and 138 in the drawings which support the hopper assembly on corresponding driven wheels, for example, wheels 140,142 and 144. The exact structure of the frame and wheel and drive assemblies are already known, and are not therefore herein described in detail. The compressor provides the air needed for the cleaning pulses of air for the filters.

The operation of the hopper assembly will now be described in relation to a load of particulate material which has been retrieved by a grab 136 from the hold of a cargo ship and deposited on top of the wide area non-return valve 46, to form a pile 138 thereon. If there is clearance beneath the valve 46, then the weight of the material will force open the rubber flaps of the portion of the valve 46 beneath the material, so that the material can drop into the interior of the hopper assembly. As the material accumulates in the inner hopper below, it will displace a corresponding volume of air in that area, causing an increase of air pressure in the inner hopper, however, that air pressure will tend to urge those flaps which have not been forced open by in flowing material closed. This inhibits the escape of dust that is kicked up within the hopper by the entry of the material from the pile 138. If the space in the hopper assembly becomes full, so that material therein stops further flow of material from the pile 138, then air being extracted by the filter units 30,32,34 and 36 will lower the pressure of the air within the hopper assembly and subsequently cause air to be drawn into the interior of the hopper assembly through the non-return valve 46 so that dust created as the material is dropped onto the non-return valve (illustrated at 140 in Figure 20) tends to be sucked down into the interior of the hopper assembly. The filter units 30,32,34 and 36 extract dust from the air being removed from the interior of the hopper so that air expelled from the hopper assembly through the filter units is substantially dust free. When material is to be discharged into a waiting vehicle, for example lorry 142 the nozzle 108 is lowered into the lorry and the valve 104 opened to allow material to fall from the pile 68, through the assembly 110, and into the lorry 142. As this happens, air is extracted from the region around the nozzle via the passage defined between the pipe assembly 110 and the pipe 112, by the blowers 120 and 122, along with airborne dust. The dust and air then pass up the pipes 124 and 126 and into the interior of the hoppers only where the air/dust can be extracted via the filters 30,32,34 and 36.

## Claims

1. A hopper assembly for use in handling particulate materials, the assembly comprising an outer hopper having at least one inclined wall for defining a tapered volume within the hopper, an inner hopper having a mouth for receiving said particulate materials, and being partially nested within the outer hopper to define a space between the inner hopper and the inclined wall of the outer hopper, and filtering means comprising a filter through which, in use, air is extracted from the volume to reduce emissions of airborne particles through the mouth, wherein the filter is so sized and shaped as to extend into the space to enable the filter to be at least partially accommodated by the space.

2. A hopper assembly according to claim 1, in which the inner hopper also has an inclined wall which is parallel to the inclined wall of the outer hopper, the two inclined walls being spaced from each other to define said space.

3. A hopper assembly according to claim 2, in which the filter is substantially wholly accommodated in the space between the inclined walls of the inner and outer hoppers.

4. A hopper assembly according to any of the preceding claims, in which the filter comprises a number of elongate filter members which extend substantially parallel to the inclined wall of the outer hopper.

5. A hopper assembly according to claim 4, in which the filter comprises a reverse jet filter.

6. A hopper assembly according to claim 5, in which each filter member comprises a fibrous or porous bag.

7. A hopper assembly according to claim 2 or claim 3, in which the filter has a housing at least part of which is constituted by said inclined walls of the inner and outer hopper.

8. A hopper assembly according to any of the preceding claims, in which the hopper assembly includes a wide area one way valve across the mouth, the valve being operable to permit the passage of materials through the mouth and into the hopper whilst preventing or inhibiting the escape of airborne particles through the mouth.

9. A hopper assembly according to claim 8, in which the filter extends below the level of the valve.

10. A hopper assembly according to any of the preceding claims, in which the space surrounds the inner hopper, the filter being one of a plurality of such filters distributed around the inner hopper.

11. A hopper assembly according to any of the preceding claims, in which the hopper assembly includes an outlet chute, through which, in use, material in the hopper is discharged, and an extraction system for extracting airborne particles from the material being discharged through the chute, wherein the extraction system exhausts air and particles into the volume within the hopper.

12. A hopper assembly for use in handling particulate materials, the assembly comprising an outer hopper, a filter through which air is extracted from the assembly to prevent or reduce the emission of airborne particles from the assembly, the filter being situated adjacent to a portion of the outer hopper and orientated at substantially the same angle as the adjacent portion of the outer hopper.

13. A hopper assembly according to claim 12, in which the assembly includes an inner hopper, at least partially nested within the outer hopper, to define the space between the inner and outer hoppers, which space accommodates a filter.

14. A hopper assembly according to claim 13, in which the inner and outer hoppers have inclined walls, which define the portion of the space in which the filter is accommodated, the space thus constituting a passage orientated at the same angle as the filter.
